Europäisches Patentamt

(19) European Patent Office

Office européen des brevets

(11) Numéro de publication: **0 183 672**
**A2**

(12) # DEMANDE DE BREVET EUROPEEN

(21) Numéro de dépôt: **85870141.0**

(22) Date de dépôt: **23.10.85**

(51) Int. Cl.⁴: **G 11 B 33/02**
**G 11 B 15/675, G 11 B 17/04**

(30) Priorité: **26.11.84 BE 214059**

(43) Date de publication de la demande:
**04.06.86 Bulletin 86/23**

(84) Etats contractants désignés:
**CH DE FR GB IT LI**

(71) Demandeur: **STAAR SOCIETE ANONYME**
**Rue des Ateliers, 19-21**
**B-1080 Bruxelles(BE)**

(72) Inventeur: **d'Alayer de Costemore d'Arc, Stéphane**
**Marie André**
**Rue Emile François 12A**
**B-1474 Ways(BE)**

(74) Mandataire: **Overath, Philippe et al,**
**Cabinet Bede 13, Avenue Antoine Depage**
**B-1050 Bruxelles(BE)**

(54) **Appareil de reproduction et d'enregistrement à insertion frontale.**

(57) L'appareil comporte une porte ou obturateur (10) pivotant de la fente d'insertion (2) et pour le pivotement de cet obturateur (10) sont prévus deux axes de pivotement (20, 22) situés dans un alignement en substance parallèle au plan d'introduction ou d'éjection et de telle manière que lors de l'introduction l'obturateur (10) peut pivoter autour de l'un (20) de ces axes et lors de l'éjection autour de l'autre axe (22), l'un de ces axes étant chaque fois en mesure de se déplacer suivant un arc de cercle (19¹, 19²) autour de l'autre axe restant en place comme point d'appui au pivotement de l'obturateur (10).

FIG. 6

EP 0 183 672 A2

## Appareil de reproduction et d'enregistrement à insertion frontale

La présente invention se rapporte aux appareils de reproduction et d'enregistrement tels que tourne-disques, joueurs de cassettes, de cartouches, etc. à insertion frontale avec porte ou obturateur pivotant de la fente d'insertion.

L'art antérieur est illustré par les figures A et B des dessins ci-annexés.

En général, les appareils à insertion frontale mis jusqu'à présent sur le marché, possèdent une porte 100 (figure A) pivotant dans un seul sens autour d'un axe fixe 102 et soumis à l'action d'un ressort 103 pour obturer la fente d'insertion 106 de l'appareil (dans l'exemple décrit, un joueur de cassettes).

Lorsqu'une cassette 110 est introduite (figure B), la porte 100 pivote à l'encontre du ressort 103 ou autre moyen élastique et vient reposer sur le boîtier de la cassette 100 lors de l'introduction de celle-ci.

En règle générale, lorsque la cassette est en position opérative, la porte 100 reste positionnée contre le boîtier de la cassette qui obture partiellement la fente 106. De cette façon, la porte n'interfère pas lors du mouvement d'éjection de la cassette.

On comprend qu'un tel dispositif n'est pas acceptable dans des appareils à disques, la porte ne pouvant rester en contact avec le disque qui est en rotation.

Il n'est pas souhaitable non plus dans des appareils à cassettes vidéo car la pression du ressort 103 sur le boîtier de la cassette est néfaste.

Le but de la présente invention est de remédier à ces inconvénients et de prévoir des moyens extrêmement simples, fiables et faciles à mettre en oeuvre, permettant d'obturer la fente d'insertion aussi bien en position opérative qu'inopérative.

En vue de la réalisation de ce but, pour le pivotement de l'obturateur sont prévus deux axes de pivotement situés dans un alignement en substance parallèle au plan d'introduction ou d'éjection et de telle manière que lors de l'introduction l'obturateur peut pivoter autour de l'un de ces axes et lors de l'éjection autour de l'autre axe ; l'un de ces axes étant chaque fois en mesure de se déplacer suivant un arc de cercle autour de l'autre axe restant en place comme point d'appui au pivotement de l'obturateur.

Afin de mieux comprendre l'invention, on en décrira ci-après un exemple de réalisation en se référant aux dessins ci-annexés dans lesquels :

la figure 1 : est une vue en perspective montrant schématiquement un tourne-disque à lecture optique ;

la figure 2 : représente la fente d'introduction de l'appareil vue de l'arrière ;

les figures 3 et 4 : sont des vues en coupe latérale montrant le fonctionnement de la porte ou obturateur lors de l'introduction d'un disque ;

les figures 5 et 6 : sont des vues en coupe latérale montrant le fonctionnement de la porte ou obturateur lors du rejet du disque.

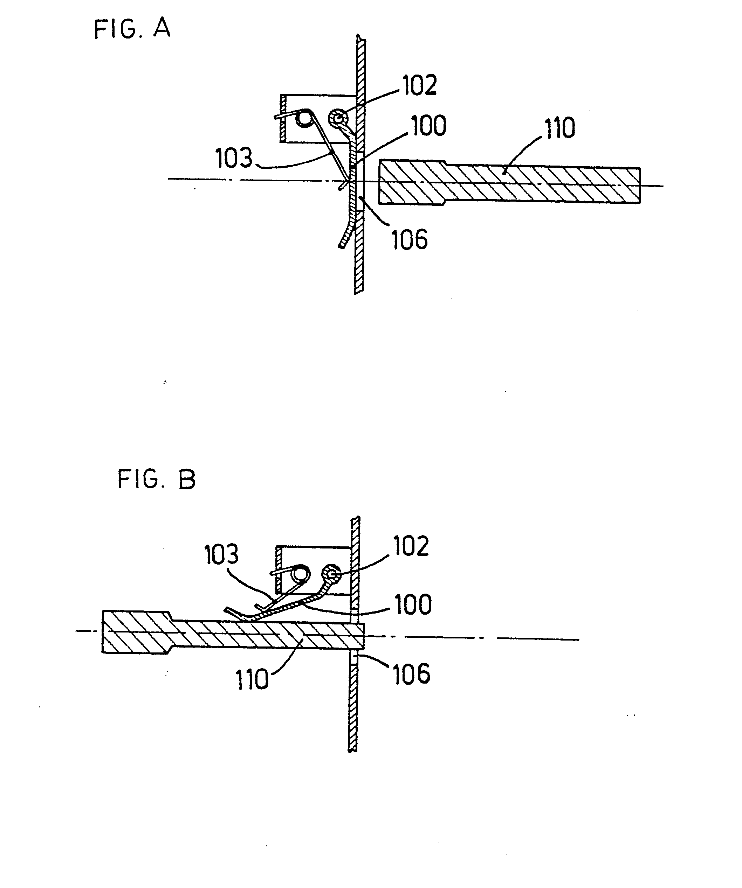

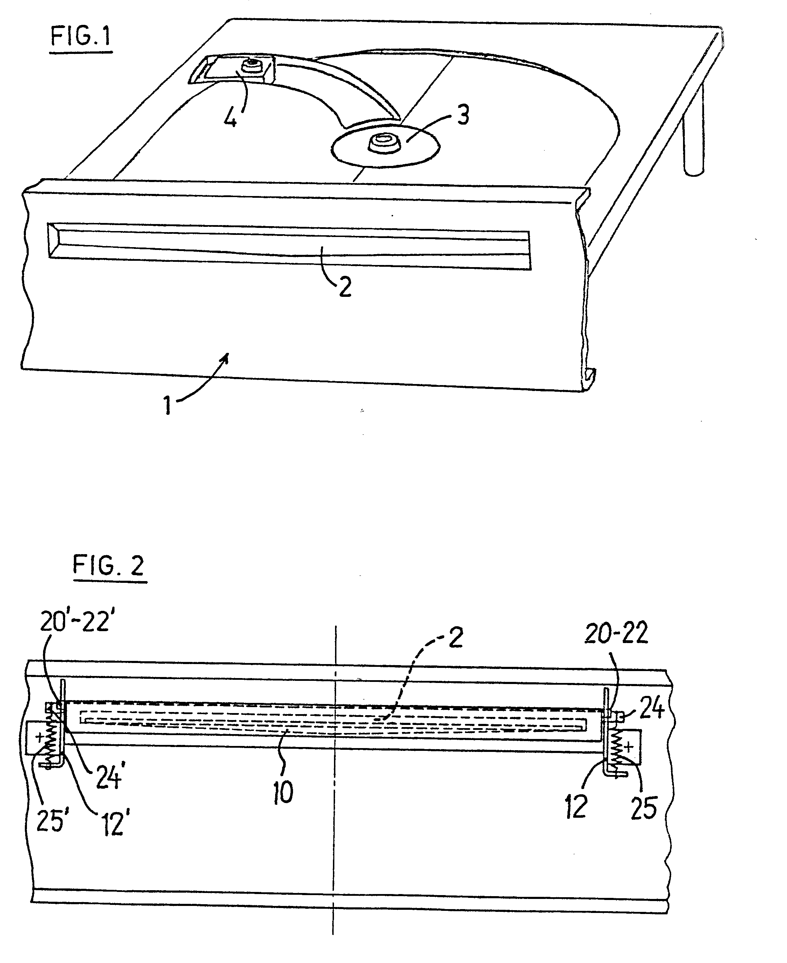

A la figure 1, on a représenté schématiquement un tourne-disque 1 à lecture par rayon laser muni d'une fente 2 permettant l'introduction du disque. Un moteur 3 et un équipage mobile 4 comportant le laser assurent respectivement la rotation du disque et l'enregistrement et/ou la reproduction d'informations à sa surface.

La figure 2 montre seulement les éléments essentiels à la description de l'invention, notamment : la fente 2, la porte 10 et ses supports latéraux 12 et 12'.

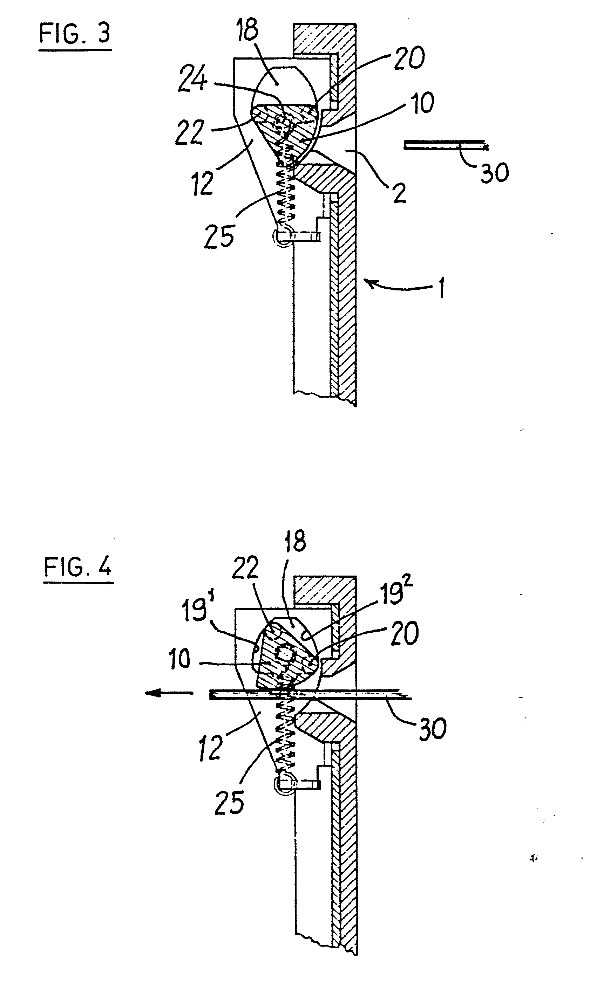

Conformément à l'invention, la porte 10 possède un profil approximativement triangulaire (figure 3) dont le sommet est généralement dirigé vers le bas et porte à chacune de ses extrémités une paire de pivots 20, 22 et 20', 22' situés chacun à proximité d'un angle à la base. Au milieu d'une ligne imaginaire reliant les centres des deux pivots, se trouve un ancrage 24, 24' auquel est attaché un ressort 25, 25' dont l'autre extrémité est fixée au support latéral 12, 12' respectivement.

Chacun des supports latéraux 12, 12' comporte une découpe 18, 18' également d'une forme sensiblement triangulaire aux coins arrondis. Ces découpes servent d'appui de rotation et de guidage aux pivots 20 et 22 de la porte lors de leur déplacement, comme décrit ci-après.

En position de fermeture, la porte, soumise uniquement à l'action des ressorts 25, 25' obture la fente d'introduction 2 (figure 3).

Lorsqu'un disque 30 est inséré par l'utilisateur, la périphérie de celui-ci agit sur la porte 10, possédant de préférence un profil dépressionnaire en V pour ne pas venir en contact avec la surface même du disque. Sous cette action, la porte pivote autour du pivot 20 qui reste fixe et est guidée par l'ascension du pivot 22 le long du profil $19^1$ de la découpe 18 (figure 4).

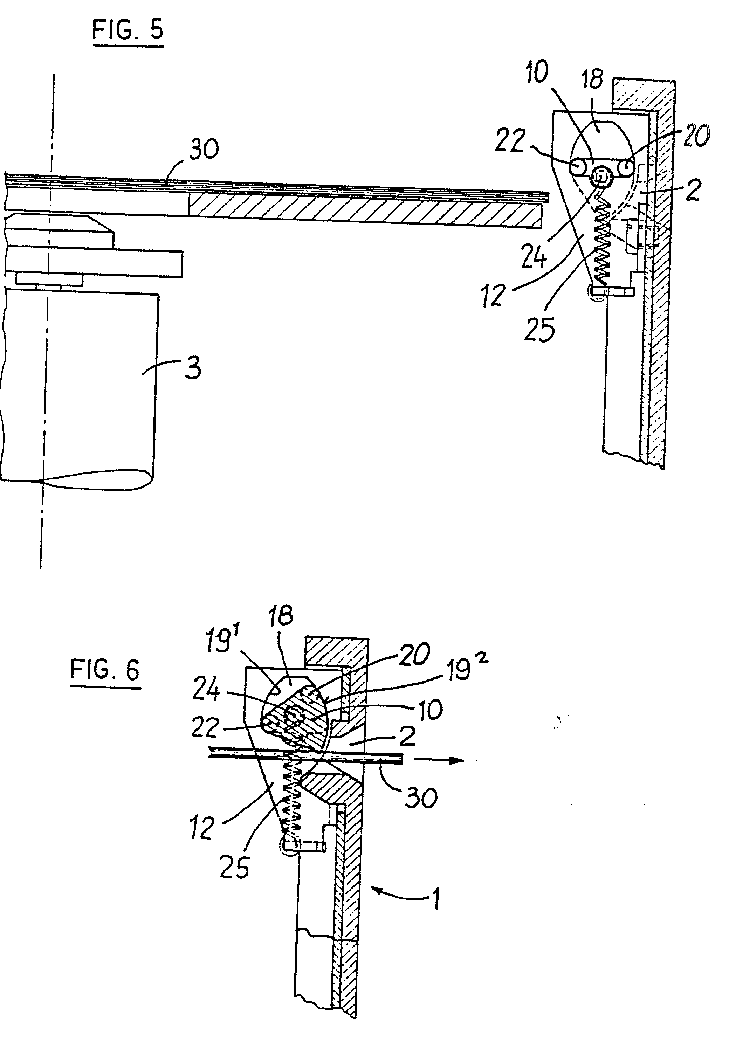

Lorsque le disque est entièrement inséré sur le dispositif destiné à l'amener en position opérative respectivement inopérative, la porte, sous l'influence des ressorts 25 et 25' revient en position de fermeture pour obturer la fente d'introduction 2 (figure 5). A ce moment, la porte 10 peut éventuellement être bloquée dans cette position de fermeture pour éviter l'introduction d'objets étrangers lors de la reproduction du disque, par tout moyen approprié comme par exemple une patte solidaire du dispositif de mise en position opérative du disque pouvant venir en contact avec le côté de base du profil triangulaire de la porte.

Lors de l'éjection du disque (figure 6), la périphérie du disque agit de nouveau sur la porte 10 qui dans ce cas pivote autour du pivot 22 qui reste fixe. Le mouvement de la porte est guidé par l'ascension du pivot 20 le long du profil $19^2$ de la découpe 18 et le disque peut être ainsi éjecté.

Lorsque ce dernier est retiré de l'appareil, la porte alors uniquement soumise aux ressorts 25 et 25' reprend sa position d'obturation de la fente d'introduction 2 telle que représentée à la figure 3.

On voit ainsi que la porte :
- peut pivoter dans le sens de déplacement du disque sans interférence avec ledit déplacement et ce dans le même volume grâce à l'agencement et aux mouvements des pivots,
- assure une obturation efficace aussi bien lorsque l'appareil contient un disque ou une cassette que lorsqu'il n'en contient pas,
- ne requiert aucun mécanisme pour sa commande, quel que soit son sens de pivotement.

Le fait que la porte pivote dans le même volume quel que soit son sens de pivotement est particulièrement dû au fait que lorsqu'un disque, une cassette ou tout autre ensemble vient agir sur celle-ci, le pivot de la porte se trouvant à proximité immédiate dudit disque, cassette, etc. reste fixe et devient l'axe de rotation de ladite porte dont le mouvement est guidé par le déplacement du pivot opposé le long du profil 19 de la découpe 18.

C'est pourquoi les bords $19^1$ et $19^2$ du profil ont une forme d'arc de cercle ; ladite forme guidant la rotation de la porte dans les deux sens en empêchant tout déplacement simultané des deux pivots 20 et 22.

On peut également prévoir que la fente de l'appareil soit éclairée pour que l'utilisateur puisse facilement introduire le disque, comme c'est déjà le cas dans les appareils connus.

Dans le cas de l'invention ici décrite, on peut tirer avantageusement parti de la présence des deux pivots en les associant à des interrupteurs ou contacts électriques qui commanderaient la coupure de l'éclairage de la fente lorsqu'un disque a été introduit (pivot 22) et sa réalimentation lorsqu'un disque a été éjecté (pivot 20). A titre de sécurité, on peut prévoir un interrupteur actionné par le mécanisme amenant le disque en position opérative ou inopérative et respectivement coupant ou alimentant l'éclairage de la fente.

Pour faciliter le pivotement de la porte quels que soient la hauteur et l'angle d'insertion, le côté de la porte 10 faisant face à la fente 2 pourra avantageusement être courbé (figure 3).

Bien entendu diverses modifications peuvent être apportées par l'homme de l'art à l'appareil qui vient d'être décrit uniquement à titre d'exemple non limitatif sans sortir du cadre de l'invention.

Revendications

1. Appareil de reproduction et/ou d'enregistrement du type à insertion  frontale (1) de la cassette ou du disque support d'informations avec porte ou obturateur (10) pivotant de la fente d'insertion (2) caractérisé en ce que pour le pivotement de l'obturateur (10) sont prévus deux axes de pivotement (20,22) situés dans un alignement en substance parallèle au plan d'introduction ou d'éjection et de telle manière que lors de l'introduction, l'obturateur (10) peut pivoter autour de l'un (20) de ces axes et lors de l'éjection autour de l'autre axe (22), l'un de ces axes étant chaque fois en mesure de se déplacer suivant un arc de cercle (19$^1$, 19$^2$) autour de l'autre axe restant en place comme point d'appui au pivotement de l'obturateur (10).

2. Appareil suivant la revendication 1,caractérisé en ce que l'obturateur (10) est constitué par un élément oblong ayant une section en substance triangulaire et portant à chacune des extrémités deux pivots (20, 22) situés chacun à proximité d'un angle à la base du triangle.

3. Appareil suivant les revendications 1 et 2, caractérisé en ce que l'obturateur (10) est soumis à l'action de moyens élastiques (25) qui tendent à maintenir les axes de pivotement (20, 22) dans leurs emplacements respectifs prévus dans un support (12) solidaire du châssis de l'appareil (1).

4. Appareil suivant l'une quelconque des revendications 1-3, caractérisé en ce que entre les pivots (20, 22) et en un point central est prévu un ancrage (24) pour un ressort (25) dont l'autre extrémité est fixée à un support latéral (12,12') et en ce que en position de fermeture la porte (10) soumise uniquement à l'action de ces ressorts (25), obture la fente d'introduction (2).

5. Appareil suivant l'une quelconque des revendications 1-4, caractérisé en ce que chacun des supports latéraux (12,12') comprend une découpe de forme sensiblement triangulaire (18) avec des coins arrondis, ces découpes (18) servant d'appui de rotation et au guidage des pivots (20, 22) de la porte (10) lors de leur déplacement.

6. Appareil suivant l'une quelconque des revendications 1 - 5, caractérisé en ce que le déplacement alternatif des deux pivots (20, 22) de la porte (10) est combiné avec des moyens électriques pour commander un éclairage de la fente (2).

7. Appareil suivant l'une quelconque des revendications 1 - 6, caractérisé en ce que le côté de la porte (10) faisant face à la fente (2) est courbé.

FIG. A

102
100
110
103
106

FIG. B

103
102
100
110
106

FIG.1

4

3

2

1

FIG. 2

20'-22'

2

20-22

24

10

24'

12'

12

25

25'

FIG. 3

18
24
22
12
25
20
10
2
30
1

FIG. 4

18
22
$19^1$
$19^2$
10
20
12
30
25

FIG. 5

FIG. 6